# EUROPEAN PATENT SPECIFICATION

(11) **EP 3 092 679 B1**
(45) Date of publication and mention of the grant of the patent: **29.07.2020**
(21) Application number: 14877165.2
(22) Date of filing: 06.01.2014
(51) Int. Cl.: H01Q 1/24, G06F 1/16, H01Q 1/22, H04B 5/04, H01Q 7/00, H04B 5/00

(54) **A BODY OF A PORTABLE ELECTRONIC DEVICE THAT INCLUDES A NEAR FIELD COIL**
KÖRPER EINER TRAGBAREN ELEKTRONISCHEN VORRICHTUNG MIT NAHFELDSPULE
CORPS D'UN DISPOSITIF ÉLECTRONIQUE PORTABLE QUI COMPREND UNE BOBINE DE CHAMP PROCHE

(43) Date of publication of application: 16.11.2016
(73) Proprietor: Nokia Technologies Oy, 02610 Espoo (FI)
(72) Inventor: RANTALA, Kimmo Antero, Ramona, CA 92065 (US); ZABACO, Jorge, San Diego, California 92131 (US); CABANBAN, Jr., Renato G., San Diego, California 92129 (US); TIMPERI, Mikko Juhani, San Diego, California 92127 (US); LI, Pei, San Diego, California 92127 (US)
(74) Representative: Cohausz & Florack
(86) International application number: PCT/IB2014/058080
(87) International publication number: WO 2015/101842

(56) References cited:
- EP-A1- 2 424 041
- EP-A1- 2 555 494
- EP-A1- 2 838 157
- EP-A2- 1 944 827
- EP-A2- 2 530 553
- WO-A1-2011/051408
- WO-A1-2011/076582
- CN-U- 202 475 503
- US-A1- 2009 002 242
- US-A1- 2010 103 612
- US-A1- 2012 276 854
- US-A1- 2012 282 857
- US-A1- 2012 329 531
- US-A1- 2014 002 313

## Description

### TECHNOLOGICAL FIELD

An example embodiment relates generally to the body of a portable electronic device and, more particularly, to the body of a portable electronic device that includes a near field coil for wireless charging, near field communication or the like.

### BACKGROUND

The body of a portable electronic device, such as a cellular telephone, a laptop computer, a tablet computer, a personal digital assistant (PDA) or the like may include one or more conductive or metal parts and one or more plastic parts. For example, a polyphenylene sulfide (PPS) part may be insert molded or overmolded to an aluminum part to form the body of a portable electronic device. Although it may be desirable to form the entire body of a portable electronic device from metal such that the body is both strong and has a consistent and aesthetic appearance, many portable electronic devices have a body that includes some combination of plastic and metal parts. For example, a portable electronic device may include one or more antennas disposed within the body. In order to permit radiative coupling with the antennas, such as for wireless charging, communication or the like, the portion of the body that is aligned with the antennas may be formed of plastic.

The inclusion of plastic parts within the body of a portable electronic device may introduce a number of issues. From an aesthetic standpoint, the plastic part may appear different than the metal part, thereby potentially reducing the attractiveness of the portable electronic device. For example, the plastic part may form a stripe, seam or window between metal parts of the body of the portable electronic device. Such a seam may be undesirable in some instances in which a seamless body is aesthetically preferable. Further, the surface of the plastic part may be softer than the surface of the metal part with this difference in the feel of a plastic part relative to a metal part being potentially disconcerting to the user of the portable electronic device. The plastic part also normally has a lower thermo-conductivity so that the user may feel different temperatures between plastic part and metal part.

To reduce the likelihood that a softer plastic part will be scratched, the plastic part may be coated separate from the metal part, such as by painting or the application of a hard coating to the plastic part, prior to combination with the metal part. As a result, the plastic parts and the metal parts may exhibit a color difference and/or the plastic parts and the metal parts may not be perfectly aligned with one another such that there is a step or an offset between the plastic and metal parts, thereby detracting from the aesthetic appeal of the body of the portable electronic device.

A non-conductive vapor metallization (NCVM) coating may be applied to the body of a portable electronic device having both plastic and metal parts so as to provide a metallic appearance to the plastic parts, thereby creating a more uniform and seamless appearance. However, the NCVM-coated plastic parts will still have a different tactile feeling than the metal parts and, in instances in which a top coat has been applied to the NCVM-coated plastic parts, the visual appearance of the plastic parts may no longer be metallic, that is, the plastic parts may no longer have a consistent appearance with the metal parts. Further, the surface hardness of an NCVM coating is less than that of metal; thereby potentially leading to increased wear of the NCVM coated plastic part which may, in turn, further increase the visual differences between the metal and plastic parts such that the resulting body of the portable electronic device eventually becomes less attractive.
US 2012/0276854 A1 relates to a slot antenna for an implantable device. US 2014/0002313 A1 relates to a thin chassis near field communication (NFC) antenna integration.
US 2010/0103612 A1 relates to electronic devices and other apparatuses adapted to receive electromagnetic wave communications.

### BRIEF SUMMARY

The invention is defined by the independent claims. Preferred embodiments of the invention are stipulated in the dependent claims. While several embodiments and/or examples have been disclosed in the description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

The body of a portable electronic device is provided in accordance with an example embodiment in which a near field coil is positioned proximate a conductive cover in such a manner that the near field coil may provide for wireless charging, near field communications or the like. By positioning the near field coil proximate the conductive cover, such as by forming the near field coil from the conductive cover, the body of the portable electronic device of an example embodiment may provide the desired strength and a consistent aesthetic appearance, while permitting the near field coil to radiate through one or more perforation apertures defined by the conductive cover of the portable electronic device. A method of fabricating the body of a portable electronic device and a resulting portable electronic device are also provided in accordance with example embodiments of the present invention.
A body of a portable electronic device is provided that includes a conductive cover that includes one or more perforation apertures defined therein. The body of also includes a filler at least partially filling the one or more perforation apertures. The body also includes a near field coil proximate the conductive cover and configured for radiation through the one or more perforation apertures, such as for wireless charging, near field communication or the like. For example, the near field coil may be integrated with the conductive cover, such as being disposed in the same plane as a portion of the conductive cover adjacent to the near field coil.

The one or more perforation apertures may extend radially outward from the near field coil, such as from the center and/or a periphery of the near field coil. The filler may include at least one of a plastic, ink, a ceramic, a ferrous or adhesive material. The filler includes an anodization layer. The body of the portable electronic device of an example embodiment may also include a plated or cladded conductive layer. In this embodiment, the near field coil has first and second sides facing an exterior and an interior of the portable electronic device, respectively, and the plated or cladded conductive layer is positioned such that the second side of the near field coil faces the plated or cladded conductive layer. The body of the portable electronic device of an example embodiment may additionally include a plastic co-molded support structure positioned such that the second side of the near field coil faces the plastic co-molded support structure. Additionally or alternatively, the body of the portable electronic device of an example embodiment may include a ferrite sheet positioned between the near field coil and one or more other conductive components of the portable electronic device.

In another example embodiment, a portable electronic device, such as at least one of a mobile telephone, a personal digital assistant (PDA), a laptop computer, a tablet computer, a navigation system, a music player or a game player, is provided. The portable electronic device includes a body including a conductive cover that includes one or more perforation apertures defined therein and a filler at least partially filling the one or more perforation apertures. The body of this example embodiment also includes a near field coil proximate to the conductive cover and configured for radiation through the one or more perforation apertures. In an example embodiment, the near field coil may be integrated with the conductive cover, such as being disposed in the same plane as a portion of the conductive cover adjacent to the near field coil. The portable electronic device of this example embodiment also includes electronic circuitry disposed within the housing and in communication with the near field coil.

The one or more perforation apertures may extend radially outward from the near field coil, such as from the center and/or a periphery of the near field coil. In an example embodiment, the filler includes at least one of a plastic, ink, a ceramic, a ferrous or adhesive material. The filler includes an anodization layer.

A method is provided that includes defining one or more perforation apertures within a conductive cover of a portable electronic device. The method also includes at least partially filling the one or more perforation apertures. The method also includes providing a near field coil proximate the conductive cover such that the near field coil is configured for radiation through the one or more perforation apertures. In an example embodiment, the method provides the near field coil proximate the connective cover by integrating the near field coil with the conductive cover, such as by disposing the near field coil in the same plane as a portion of the conductive cover adjacent to the near field coil.

The method of an example embodiment may define the one or more perforation apertures so as to extend radially outward from the near field coil, such as from the center and/or a periphery of the near field coil. The method at least partially fills the one or more perforation apertures with an anodization layer.

### BRIEF DESCRIPTION OF THE DRAWINGS

Having thus described certain example embodiments of the present invention in general terms, reference will hereinafter be made to the accompanying drawings, which are not necessarily drawn to scale, and wherein:
FIG. 1 is a perspective view of a portable electronic device that may be fabricated in accordance with an example embodiment of the present invention;
FIG. 2 is a perspective view of the body of a portable electronic device that includes a conductive cover and a near field coil proximate to the conductive cover in accordance with an example embodiment of the present invention;
FIG. 3 is a flowchart illustrating operations performed to fabricate a body of a portable electronic device in accordance with an example embodiment of the present invention;
FIGS. 4a and 4b are cross-sectional views of a portion of the conductive cover that includes the perforation that has been filled in accordance with example embodiments of the present invention;
FIG. 5 is a fragmentary cross-sectional view of a portion of the body of a portable electronic device in which the near field coil is integrated with the conductive cover in accordance with an example embodiment of the present invention;
FIG. 6 is a plan view of a portion of the body of a portable electric device in accordance with another example embodiment of the present invention;
FIG. 7 is a fragmentary cross-sectional view of a portion of the body of the portable electronic device depicted in FIG. 6;
FIG. 8 is a plan view of a portion of the body of a portable electric device in accordance with a further example embodiment of the present invention;
FIG. 9 is a plan view of a portion of the body of a portable electric device in accordance with yet another example embodiment of the present invention; and
FIG. 10 is a fragmentary cross-sectional view of a portion of the body of a portable electronic device in which the near field coil is integrated within a plastic co-molded support structure in accordance with an example embodiment of the present invention.

### DETAILED DESCRIPTION

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. The scope of the invention is defined by the appended claims. Like numbers refer to like elements throughout.

As used in this application, the term "circuitry" refers to all of the following:
(a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or application specific integrated circuit for a mobile phone or a similar integrated circuit in server, a cellular network device, or other network device.

Portable electronic devices, such as a mobile telephone, e.g., a cellular telephone, a smartphone or the like, a personal digital assistant (PDA), a laptop computer, a tablet computer, a navigation system, a music player, a game player or any of numerous other computation devices, content generation devices, content consumption devices or combinations thereof, generally include a body, such as a housing, that provides strength and rigidity so as to protect electronic circuitry disposed within the housing. The body of a portable electronic device may also be configured to have an attractive aesthetic appearance so as to be appealing to a user. As described below, the body of some portable electronic devices may be fabricated in a manner that includes a near field coil so as to facilitate wireless charging, near field communication or the like.

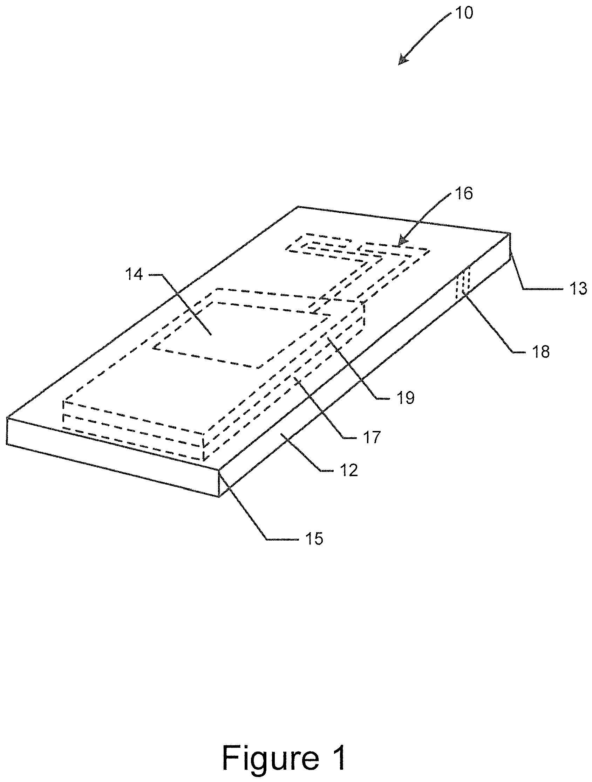

By way of example, FIG. 1 illustrates a portable electronic device 10, such as a mobile telephone, PDA or the like, that includes a body 12, such as a housing, including a conductive portion and electronic circuitry 14, such as one or more processors, one or more memories, radio frequency circuitry, a battery, etc., disposed at least partially and, more typically, entirely within the body of the portable electronic device, as represented by the dashed lines in FIG. 1. The electronic circuitry disposed within the body of the portable electronic device of this embodiment may include an antenna arrangement 16 for transmitting and/or receiving signals, such as radio frequency (RF) signals. Although the antenna arrangement may be configured in various manners, the antenna arrangement of one embodiment includes an antenna element, e.g., a radiating element, extending from and coupled to the electronic circuitry, e.g., the radio frequency circuitry, at a first end thereof and optionally a coupled arm or parasitic element which is coupled to a ground plane 17 at a first end thereof and coupled to the antenna element at least at a second end thereof. In some example embodiments, the antenna element may be coupled to the ground plane between at least one point on the antenna element and the ground plane. The ground plane is provided by a conductive portion disposed on at least one layer of a printed wiring board (PWB) 19, but may be provided by other conductive objects within the device in addition to the PWB or instead of the PWB. Since the conductive portion of the body may attenuate or block the signals transmitted to and from the antenna, the body of the portable electronic device of this embodiment may include one or more perforation apertures 18 defined by the conductive portion of the body to permit the propagation of RF signals to and from the antenna. The laser perforation aperture(s) of an example embodiment may be positioned in alignment with a respective antenna, such as with the antenna element and/or the parasitic element. While the body of a portable electronic device may include a single set of laser perforation aperture(s), the body of a portable electronic device may include two or more sets of laser perforation aperture(s) defined by different portions of the body, such as by opposite sides of the body.

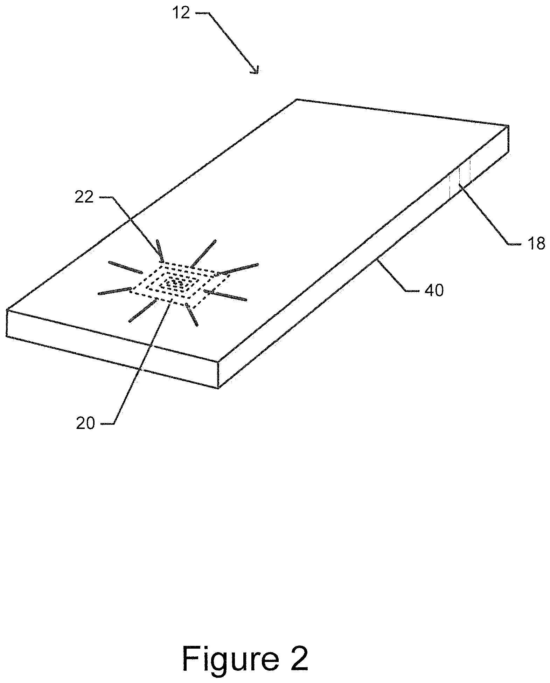

The body 12 of the portable electronic device 10 includes a conductive cover 40 as shown in FIG. 2. Relative to the example embodiment of the portable electronic device of FIG. 1, the conductive cover may form the rear and side surfaces of the body as shown in FIG. 2. In other embodiments not depicted in FIG. 2, the conductive cover may form only a portion of one or more of the front, rear or side surfaces of the body. In any of the foregoing embodiments, the conductive cover comprises at least a portion of the protective housing of the portable electronic device and serves to house electronic circuitry of the portable electronic device. The conductive cover of the body of the portable electronic device may be formed of various metals including, for example, aluminum, or from other conductive materials, such as and not limited to graphite, carbon, conductive composite materials or the like. Additionally or alternatively, the conductive cover of the body may include a conductive layer, e.g., a metal layer, which is coated with plastic or a plastic layer that is coated or that otherwise carries a conductive layer, e.g., a metal layer.

As described below, the body 12 of the portable electronic device 10 of an example embodiment may include a near field coil 20 that is positioned proximate to the conductive cover 40. As described herein, the near field coil is positioned proximate to the conductive cover in an instance in which the near field coil is formed from or otherwise positioned in a co-planar relationship to the conductive cover or is included in one or more material layers that are positioned adjacent the conductive cover, such as by being carried by and/or attached to the conductive cover. The near field coil is an antenna that may be utilized for various purposes, including wireless charging, near field communications (NFC), radio frequency identification (RFID) or the like. As such, the near field coil may be configured in various manners, including as a planar spiral coil as shown in FIG. 2, a non-planar spiral coil, an inductive-type coupler or the like. By positioning the near field coil proximate the conductive cover, the thickness and the weight of the body of the portable electronic device may be advantageously reduced.

In order to facilitate radiation of the near-field coil 20, such as for wireless charging, near field communication, RFID or the like, the conductive cover 40 may define one or more perforation apertures 22. The perforation apertures may have various configurations including, for example, at least one of a slot, a hole, a notch or a slit. In the illustrated embodiment, the perforation apertures are defined in a radial pattern so as to extend radially outward, such as from the center and/or periphery of the near field coil. However, the perforation apertures may be defined in other patterns, such as a linear pattern, a coil-shaped pattern or the like. The perforation apertures may be defined in various manners including, for example, by impingement of a laser beam upon the conductive cover 40 that serves to cut the conductive cover. Although illustrated in FIG. 2, the perforation apertures are generally not visible such that the body 12 of the portable electronic device 10 has a consistent aesthetic appearance, such as a consistent metallic appearance. However, the perforation apertures facilitate radiation by the near field coil therethrough for wireless charging, near field communication, RFID or the like.

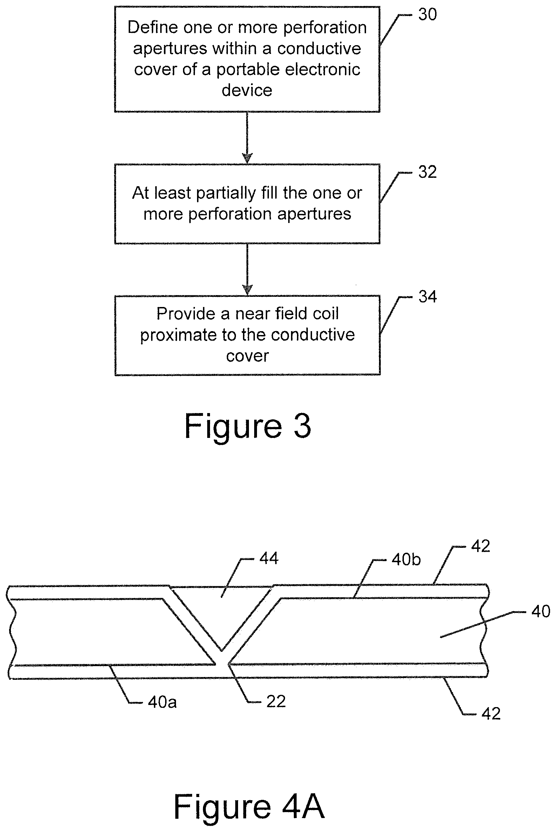

Referring now to FIG. 3, the operations performed in order to fabricate the body 12 of the portable electronic device 10 in accordance with an example embodiment of the present invention are illustrated. As shown in block 30 of FIG. 3, at least one aperture 22 and, more typically, a plurality of perforation apertures are defined within the conductive cover 40 of the body of the portable electronic device. These apertures may be defined in various manners, such as by laser perforation, e.g., laser cutting, mechanical cutting, stamping, punching, etc., through various portions of the conductive cover so that conductive cover portion(s) are removed from the cover. In the embodiment illustrated in FIG. 2, however, a rear surface of the portable electronic device may define the perforation apertures. As noted above, the perforation apertures may be defined in various patterns, such as the radial pattern of FIG 2, a linear pattern, a spiral pattern or the like. Additionally, although the perforation apertures are shown as continuous, lengthwise extending apertures, a perforation aperture may be formed of a plurality of individual perforation aperture segments arranged in a predefined manner, such as in a linear fashion.

As shown in block 32 of FIG. 3, the one or more perforation apertures 22 may then be at least partially filled. By filling the perforation apertures, the apertures defined by the conductive cover 40 are not generally visible, such that the body 12 of the portable electronic device 10 has a consistent and aesthetically appealing appearance. However, the perforation apertures are filled in a manner that still permits radiation therethrough by the near field coil 20 in one or both directions, that is, radiation from and/or to the near field coil.

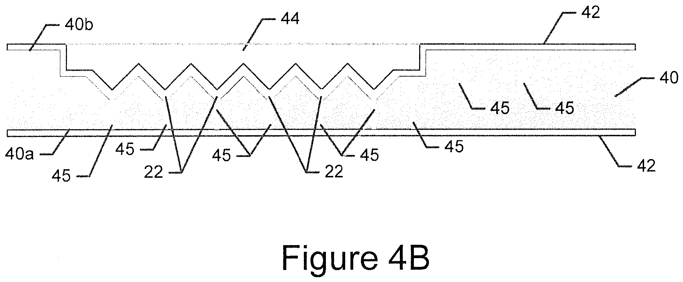

The perforation apertures 22 may be at least partially filled in various manners. As shown in the alternative embodiments depicted in FIGS. 4a and 4b, for example, the conductive cover 40 may define the perforation apertures, such as by laser perforation, to have a generally truncated V-shape with tapered sidewalls and an opening proximate one surface of the conductive cover that is wider than the opening proximate the other surface of the conductive cover. As such, the apertures may extend through the thickness of the conductive cover. While the conductive cover may have various thicknesses, the conductive cover of one embodiment has a thickness of about 0.3 mm such that the apertures also have a depth of about 0.3 mm. The laser perforation apertures may be defined to have various sizes and shapes including, for example, apertures having widths of a few micrometers, as well as larger apertures. With reference to FIGS. 4a and 4b, although the configuration of FIG. 4a may be simpler, the configuration of FIG. 4b may be more straightforward to fabricate as a result of the larger laser cuts, which may also serve as a parameter to control coil performance. In regards to the configuration of FIG. 4b, the slots 45 are shown to have parallel sidewalls. However, the slots 45 would generally have a trapezoidal shape with the wider opening facing either the inner surface of the conductive cover or the outer surface of the conductive cover depending upon the direction from which the laser originated.

In order to at least partially fill the perforation apertures 22, the conductive cover 40 of an example embodiment may then be anodized so as to form an anodization layer 42, as shown in FIG. 4. The anodization layer may be formed of various materials, but is typically formed of a metal oxide, such as aluminum oxide. In accordance with an example embodiment of the present invention, the anodization layer at least partially fills the perforation apertures. Although the perforation apertures may be completely filled by the anodization layer, the anodization layer of some embodiments may fill only a portion of the perforation apertures. However, at least the portion of the aperture that opens to the exterior surface of the conductive cover may be filled with the anodization layer, such that the anodization layer appears to continuously cover the body 12 of the portable electronic device 10 when viewed from the exterior of the portable electronic device.

The perforation apertures 22 of one example embodiment may then be overmolded, such as with a plastic, a resin or an adhesive. In this regard, the interior surface 40a of the conductive cover that faces the electronic circuitry 14 of the portable electronic device 10 may be overmolded so as to fill the perforation apertures to the extent that the perforation apertures were not previously filled by the anodization layer. After the overmolded material 44, such as the plastic, resin or adhesive, has cured, the overmolded material may be machined, such as by grinding, polishing or the like, such that the resulting overmolded material is flush with the remainder of the interior surface of the conductive cover of the body of the portable electronic device, as shown in FIG. 4. In addition to filling the perforation apertures, the overmolded material of an example embodiment may form a plastic part on the interior of the conductive cover which defines one or more internal features, such as one or more molded screw towers, one or more snaps, etc. In this regard, the overmolded material may be formed of various different types of plastic materials including, for example, polybutylene teraphthalate (PBT), polyphenylene sulfide (PPS), a polyamide (PA), polyaryletherketone (PAEK), etc. Although the anodization layer is described above to be to be formed prior to the overmolding, the order may be reversed in other embodiments with the overmolding being performed prior to formation of the anodization layer.

The resulting conductive cover 40 of the body 12 of the portable electronic device 10 includes at least one and, in some embodiments, a plurality of perforation apertures 22 that may facilitate radiation therethrough by the near field coil 20, such as for wireless charging of the battery, near field communication, RFID or the like. However, regardless of the filler, the conductive cover is fabricated in a manner such that the perforation apertures are not visible from the exterior of the portable electronic device and, instead, the exterior surface 40b of the conductive cover as seen by the user of the portable electronic device, may have a consistent metallic appearance attributable to the anodization or other coating, oxidation or treatment of the conductive cover which at least partially fills the perforation apertures with the anodization layer 42 or other filler. Consequently, the body of the portable electronic device is both aesthetically attractive as a result of its consistent metallic appearance, while still providing for radiation of the near field coil through the perforation apertures.

As shown in block 34 of FIG. 3, a near-field coil 20 is also provided proximate to the conductive cover 40 and, in some embodiments, the body 12 of the portable electronic device 10 may include both the conductive cover and the near field coil. By providing the near field coil proximate to the conductive cover as described below, the thickness and weight of the body of the portable electronic device may be advantageously reduced.

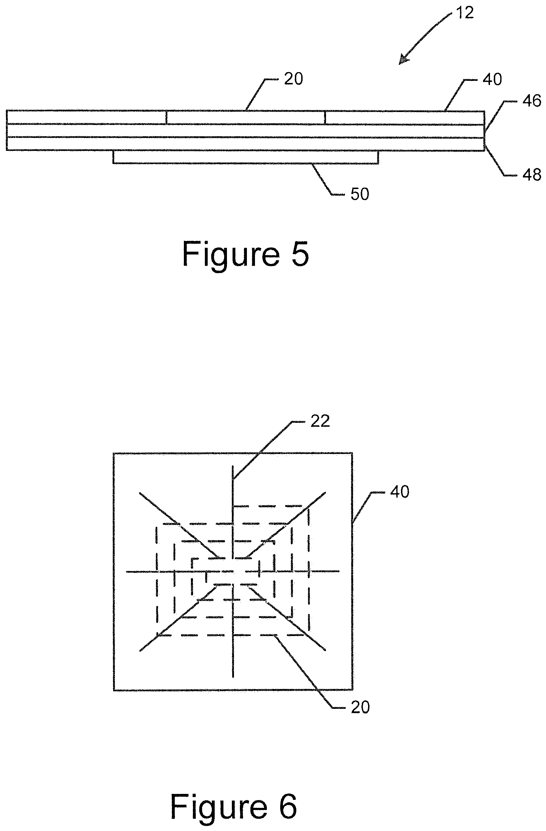

The near-field coil 20 may be provided proximate to the conductive cover 40 in various manners. As shown in FIG. 5, however, the near field coil may be provided proximate to the conductive cover by integrating the near field coil with the conductive cover. Although shown in FIG. 5 to be disposed within the conductive cover, the near field coil of an example embodiment may be integrated with the conductive cover, such as by being cut from the conductive cover by lasering, a chemical reaction, mechanical cutting or the like. As such, the near field coil of this embodiment may be disposed in the same plane as at least the portions of the conductive cover that are located adjacent to the near field coil, such as shown in FIG. 5.

A layer of plastic, resin or other non-conductive material, such as the plastic co-molded support structure 48 discussed below, may be positioned interior of the conductive cover, such as upon the interior surface 40a of the conductive cover, in order to support and provide electrical isolation for the near field coil. The exterior surface 40b of the conductive cover including the near field coil may, in turn, be covered with a surface layer, such as an anodization layer to protect the near field coil.

In this example embodiment and as shown in FIG. 2, the near field coil 20 may be integrated with the conductive cover 40 so as to be centrally located relative to the perforation apertures 22 that extend radially outward therefrom in a symmetric manner. Indeed, the perforation apertures may extend radially outward from the center of the near field coil and/or from the periphery thereof. The perforation apertures facilitate radiation therethrough by the near field coil so as to communicate with other antennas or devices offboard of the portable electronic device for wireless charging of the battery of the portable electronic device, near field communication, RFID or other purposes. As such, the near field coil is also in communication, such as via a wired connection or otherwise with the electronic circuitry 14 of the portable electronic device. Additionally, the perforation apertures help to direct eddy currents away from the near field coil so that the eddy currents do not cancel or otherwise materially degrade the fields generated by the near field coil.

As also shown in FIG. 5, the body 12 of the portable electronic device 10 may include one or more additional layers. In this regard, the body of the portable electronic device may optionally include a plated or cladded conductive layer 46. The plated or cladded conductive layer may be positioned interior of the conductive cover 40 and may be galvanically combined with the conductive cover. The plated or cladded conductive layer may be aligned with the near field coil 20 and, indeed, the near field coil may be integrated with the plated or cladded conductive layer in the same manner that the near field coil is integrated with the conductive cover. For example, the near field coil of an example embodiment may be integrated with the plated or cladded conductive layer by also being formed from the plated or cladded conductive layer, such as by being cut from the plated or cladded conductive layer by lasering, a chemical reaction, mechanical cutting or the like, at the same time that the near field coil is cut from the conductive cover. The plated or cladded conductive layer may be formed of various materials including, for example, copper, silver, gold, etc. The plated or cladded conductive layer may increase the conductivity of the near field coil and, consequently, improve its performance. As shown in FIG. 5, the body of the portable electronic device may additionally or alternatively optionally include a plastic co-molded support structure 48 positioned interior of the conductive cover so as to also underlie the near-field coil such that the second side of the near field coil faces the plastic co-molded support structure. The plastic co-molded support structure may be configured to support the near field coil and/or the plated or cladded conductive layer. As described below, the near field coil may alternatively be directly co-molded into the plastic co-molded support structure in another embodiment. Additionally or alternatively, the body of the portable electronic device may also include a ferrite sheet 50 positioned interior of the conductive covering and in alignment with the near-field coil. As such, the ferrite sheet is positioned between the near-field coil and one or more other conductive components of the portable electronic device that may be housed within the body, such as a battery shielding cans or the like. The ferrite sheet may therefore absorb the field produced from the near field coil so as to isolate the near field coil from the conductive components within the body, such as the battery, metal chassis, etc. The ferrite sheet may be configured to prevent the formation of eddy currents on those conductive components. As a result, the performance of near field coil can be retained in spite of the presence of nearby conductive components, some of which may be relatively large. In the foregoing example, the conductive cover and the near field coil combined with the plated and cladded high conductivity layer may be disposed in a first plane, the plastic co-molded support structure may be disposed in a second plane and the ferrite sheet may be disposed in a third plane, as shown in FIG. 5.

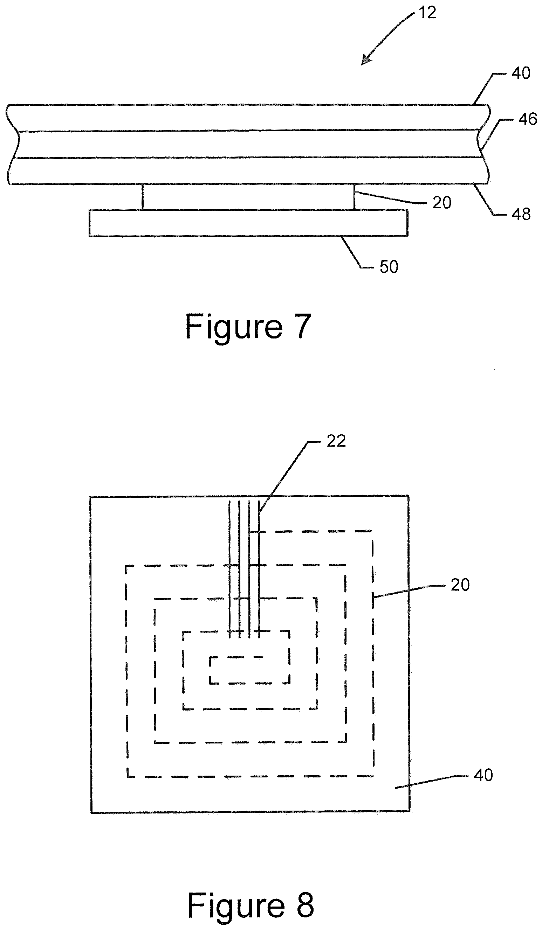

Although one example is provided by FIG. 5, the near field coil 20 may be combined with the conductive cover 40 so as to be carried thereby in various manners. As shown in FIG. 6, for example, the near field coil 20 may be carried by the conductive cover so as to underlie at least portions of the perforation apertures 22. As such, the perforation apertures overlie and extend across at least a portion of the near field coil. In this embodiment, the near field coil may be positioned interior of the conductive cover, such as by being positioned interior of each of the conductive cover, the plated or cladded conductive layer 46 and the plastic co-molded support structure 48 as shown in FIG. 7. In this embodiment, the body 12 of the portable electronic device 10 may also include a ferrite sheet 50 positioned interior of the near field coil so as to be positioned between the near field coil and one or more other conductive components of the portable electronic device. In this example, the conductive cover may be disposed in a first plane, the plated or cladded conductive layer may be disposed in a second plane, the plastic co-molded support structure may be disposed in a third plane, the near field coil may be disposed in a fourth plane and the ferrite sheet may be disposed in a fifth plane, as shown in FIG. 7. In this embodiment, the perforation apertures may cut though both the conductive cover and the plated or cladded conductive layer.

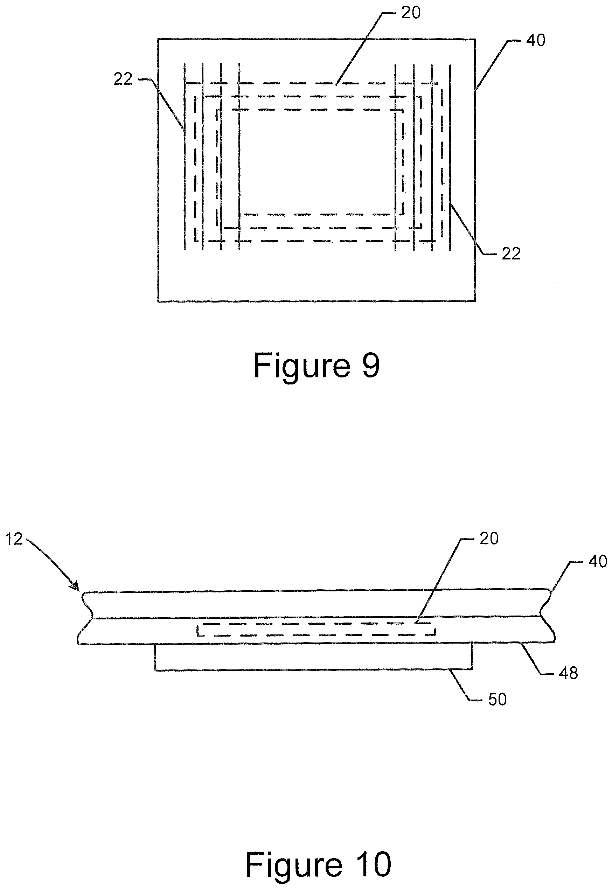

As noted above, the perforation apertures 22 may be defined in accordance with other patterns. As shown in FIG. 8, for example, the conductive cover 40 may define a plurality of perforation apertures 22 that extend linearly and in parallel to one another. The near field coil 20 may be carried by the conductive cover of this example embodiment such that the plurality of perforation apertures overlie and extend across a portion of the near field coil. As shown in FIG. 9, the conductive cover 40 of an example embodiment may include a plurality of sets of perforation apertures 22, such as first and second sets of perforation apertures defined on opposite sides of the conductive cover. In the illustrated embodiment, each set of perforation apertures includes the same number of linear perforation apertures arranged in parallel to one another, although the sets of perforation apertures may include different numbers of perforation apertures in different configurations to one another. The conductive cover of this example embodiment may define the perforation apertures so as to extend across and overlie different portions of the near field coil carried by the conductive cover. Although the near field coil may be carried by the conductive cover in various manners as described above, the body 12 of the portable electronic device 10 depicted in FIGS. 8 and 9 may include a near field coil positioned interior of the conductive cover, such as shown in FIG. 7 and as described above.

Alternatively, the near field coil 20 may be combined with the conductive cover 40 so as to be carried by the conductive cover by incorporating the near field coil within one of the other layers of the body 12 of the portable electronic device 10. As shown in FIG. 10, for example, the plastic co-molded support structure 48 that is positioned interior of the conductive cover may include the near field coil. For example, the near field coil may be molded within the plastic co-molded support structure and the plastic co-molded support structure may be carried by the conductive cover 40 in such a manner that the perforation apertures 22 defined by the conductive cover are properly positioned relative to the near field coil, such as in the manners described above. In this example, the conductive cover may be disposed in a first plane, the plastic co-molded support structure and the near field coil may be disposed in a second plane and the ferrite sheet 50 may be disposed in a third plane, as shown in FIG. 10.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A body (12) of a portable electronic device (10), the body (12) comprising:
a conductive cover (40) that includes one or more perforation apertures (22) defined therein;
a filler at least partially filling the one or more perforation apertures (22); and
a near field coil (20) proximate to the conductive cover (40) and configured for radiation through the one or more perforation apertures (22),
wherein
the one or more perforation apertures (22) have a generally truncated V-shape with tapered sidewalls resulting in an opening proximate to one surface of the conductive cover (40) that is wider than the opening proximate to the other surface of the conductive cover (40).
wherein the one or more perforation apertures (22) are at least partially filled with an anodization layer (42), and
wherein at least the portion of the one or more perforation apertures (22) that opens to the exterior surface of the conductive cover (40) is filled with the anodization layer (42), such that the anodization layer continuously covers the body (12) of the portable electronic device (10).

2. A body (12) of a portable electronic device (10) according to Claim 1 wherein the near field coil (20) is integrated with the conductive cover (40).

3. A body (12) of a portable electronic device (10) according to Claim 2 wherein the near field coil (20) is disposed in a same plane as a portion of the conductive cover (40) adjacent to the near field coil (20).

4. A body (12) of a portable electronic device (10) according to any one of Claims 1 to 3 wherein the one or more perforation apertures (22) extend radially outward from the near field coil (20).

5. A body (12) of a portable electronic device (10) according to any one of Claims 1 to 4 wherein the filler comprises at least one of a plastic, ink, a ceramic, a ferrous, or an adhesive material.

6. A body (12) of a portable electronic device (10) according to any one of Claims 1 to 5 wherein the body (12) of the portable electronic device (10) further comprises a plated or cladded conductive layer (46), and wherein the near field coil (20) is also integrated with the plated or cladded conductive layer (46).

7. A portable electronic device (10) comprising:
a body (12) according to claim 1; and
electronic circuitry (14) disposed within the body (12) and in communication with the near field coil (20).

8. A portable electronic device (10) according to Claim 7 wherein the near field coil (20) is integrated with the conductive cover (40).

9. A portable electronic device (10) according to Claim 8 wherein the near field coil (20) is disposed in a same plane as a portion of the conductive cover (40) adjacent to the near field coil (20).

10. A portable electronic device (10) according to any one of Claims 7 to 9 wherein the one or more perforation apertures (22) extend radially outward from the near field coil (20).

11. A portable electronic device (10) according to any one of Claims 7 to 10 wherein the near field coil (20) has first and second sides facing an exterior and an interior of the portable electronic device (10), respectively, and wherein the body (12) of the portable electronic device (10) further comprises a plastic co-molded support structure (48) positioned such that the second side of the near field coil (20) faces the plastic co-molded support structure (48).

12. A portable electronic device (10) according to any one of Claims 7 to 11 further comprising a ferrite sheet (50) positioned between the near field coil (20) and one or more other conductive components of the portable electronic device (10).

13. A method comprising:
defining one or more perforation apertures (22) within a conductive cover (40) of a portable electronic device (10), wherein the one or more perforation apertures (22) have a generally truncated V-shape with tapered sidewalls resulting in an opening proximate to one surface of the conductive cover (40) that is wider than the opening proximate to the other surface of the conductive cover (40);
at least partially filling the one or more perforation apertures (22); and
providing a near field coil (20) proximate to the conductive cover (40) such that the near field coil (20) is configured for radiation through the one or more perforation apertures (22),
wherein the one or more perforation apertures (22) are at least partially filled with an anodization layer (42),
wherein at least the portion of the one or more perforation apertures (22) that opens to the exterior surface of the conductive cover (40) is filled with the anodization layer (42) such that the anodization layer continuously covers the body (12) of the portable electronic device (10).

14. A method according to Claim 13 wherein providing the near field coil (20) proximate to the conductive cover (40) comprises integrating the near field coil (20) with the conductive cover (40).

15. A method according to Claim 14 wherein integrating the near field coil (20) with the conductive cover (40) comprises forming the near field coil (20) in a same plane as a portion of the conductive cover (40) adjacent to the near field coil (20).

## Patentansprüche

1. Körper (12) einer tragbaren elektronischen Vorrichtung (10), wobei der Körper (12) Folgendes umfasst:
eine leitfähige Abdeckung (40), die eine oder mehrere darin definierte Perforationsöffnungen (22) beinhaltet;
einen Füllstoff, der die eine oder die mehreren Perforationsöffnungen (22) zumindest teilweise ausfüllt; und
eine Nahfeldspule (20), die sich in der Nähe der leitfähigen Abdeckung (40) befindet und für Strahlung durch die eine oder die mehreren Perforationsöffnungen (22) ausgelegt ist,
wobei
die eine oder die mehreren Perforationsöffnungen (22) eine im Allgemeinen abgestumpfte V-Form mit sich verjüngenden Seitenwänden aufweisen, was zu einer Öffnung in der Nähe einer Oberfläche der leitfähigen Abdeckung (40) führt, die breiter ist als die Öffnung in der Nähe der anderen Oberfläche der leitfähigen Abdeckung (40),
wobei die eine oder die mehreren Perforationsöffnungen (22) zumindest teilweise mit einer Anodisierungsschicht (42) gefüllt sind, und
wobei zumindest der Abschnitt der einen oder der mehreren Perforationsöffnungen (22), der sich zur Außenfläche der leitfähigen Abdeckung (40) hin öffnet, mit der Anodisierungsschicht (42) gefüllt ist, und zwar derart, dass die Anodisierungsschicht den Körper (12) der tragbaren elektronischen Vorrichtung (10) durchgehend bedeckt.

2. Körper (12) einer tragbaren elektronischen Vorrichtung (10) nach Anspruch 1, wobei die Nahfeldspule (20) mit der leitfähigen Abdeckung (40) integriert ist.

3. Körper (12) einer tragbaren elektronischen Vorrichtung (10) nach Anspruch 2, wobei die Nahfeldspule (20) in einer gleichen Ebene eingerichtet ist wie ein Abschnitt der leitfähigen Abdeckung (40), der an die Nahfeldspule (20) grenzt.

4. Körper (12) einer tragbaren elektronischen Vorrichtung (10) nach einem der Ansprüche 1 bis 3, wobei sich die eine oder die mehreren Perforationsöffnungen (22) von der Nahfeldspule (20) radial nach außen erstrecken.

5. Körper (12) einer tragbaren elektronischen Vorrichtung (10) nach einem der Ansprüche 1 bis 4, wobei der Füllstoff mindestens eines von einem Kunststoff, einer Druckfarbe, einem keramischen, einem eisenhaltigen oder einem Klebstoffmaterial umfasst.

6. Körper (12) einer tragbaren elektronischen Vorrichtung (10) nach einem der Ansprüche 1 bis 5, wobei der Körper (12) der tragbaren elektronischen Vorrichtung (10) ferner eine plattierte oder als Hülle vorliegende leitfähige Schicht (46) umfasst und wobei die Nahfeldspule (20) ebenfalls mit der plattierten oder als Hülle vorliegenden leitfähigen Schicht (46) integriert ist.

7. Tragbare elektronisches Vorrichtung (10), umfassend:
einen Körper (12) nach Anspruch 1; und
elektronische Schaltungsanordnung (14), die innerhalb des Körpers (12) eingerichtet ist und mit der Nahfeldspule (20) in Verbindung steht.

8. Tragbare elektronische Vorrichtung (10) nach Anspruch 7, wobei die Nahfeldspule (20) mit der leitfähigen Abdeckung (40) integriert ist.

9. Tragbare elektronische Vorrichtung (10) nach Anspruch 8, wobei die Nahfeldspule (20) in einer gleichen Ebene eingerichtet ist wie ein Abschnitt der leitfähigen Abdeckung (40), der an die Nahfeldspule (20) grenzt.

10. Tragbare elektronische Vorrichtung (10) nach einem der Ansprüche 7 bis 9, wobei sich die eine oder die mehreren Perforationsöffnungen (22) von der Nahfeldspule (20) radial nach außen erstrecken.

11. Tragbare elektronische Vorrichtung (10) nach einem der Ansprüche 7 bis 10, wobei die Nahfeldspule (20) eine erste und eine zweite Seite aufweist, die einem Äußeren bzw. einem Inneren der tragbaren elektronischen Vorrichtung (10) zugewandt sind, und wobei der Körper (12) der tragbaren elektronischen Vorrichtung (10) ferner eine aus Kunststoff geformte Haltestruktur (48) umfasst, die so angeordnet ist, dass die zweite Seite der Nahfeldspule (20) der aus Kunststoff geformten Haltestruktur (48) zugewandt ist.

12. Tragbare elektronische Vorrichtung (10) nach einem der Ansprüche 7 bis 11, ferner umfassend ein Ferritblatt (50), das zwischen der Nahfeldspule (20) und einer oder mehreren anderen leitfähigen Komponenten der tragbaren elektronischen Vorrichtung (10) angeordnet ist.

13. Verfahren, umfassend:
Definieren einer oder mehrerer Perforationsöffnungen (22) innerhalb einer leitfähigen Abdeckung (40) einer tragbaren elektronischen Vorrichtung (10), wobei die eine oder die mehreren Perforationsöffnungen (22) eine im Allgemeinen abgestumpfte V-Form mit sich verjüngenden Seitenwänden aufweisen, was zu einer Öffnung in der Nähe einer Oberfläche der leitfähigen Abdeckung (40) führt, die breiter ist als die Öffnung in der Nähe der anderen Oberfläche der leitfähigen Abdeckung (40);
zumindest teilweises Füllen der einen oder der mehreren Perforationsöffnungen (22); und
Bereitstellen einer Nahfeldspule (20) in der Nähe der leitfähigen Abdeckung (40), und zwar derart, dass die Nahfeldspule (20) für Strahlung durch die eine oder die mehreren Perforationsöffnungen (22) ausgelegt ist,
wobei die eine oder die mehreren Perforationsöffnungen (22) zumindest teilweise mit einer Anodisierungsschicht (42) gefüllt sind,
wobei zumindest der Abschnitt der einen oder der mehreren Perforationsöffnungen (22), der sich zur Außenfläche der leitfähigen Abdeckung (40) hin öffnet, mit der Anodisierungsschicht (42) gefüllt ist, und zwar derart, dass die Anodisierungsschicht den Körper (12) der tragbaren elektronischen Vorrichtung (10) durchgehend bedeckt.

14. Verfahren nach Anspruch 13, wobei das Bereitstellen der Nahfeldspule (20) in der Nähe der leitfähigen Abdeckung (40) das Integrieren der Nahfeldspule (20) mit der leitfähigen Abdeckung (40) umfasst.

15. Verfahren nach Anspruch 14, wobei das Integrieren der Nahfeldspule (20) mit der leitfähigen Abdeckung (40) das Ausbilden der Nahfeldspule (20) in einer gleichen Ebene wie ein Abschnitt der leitfähigen Abdeckung (40), der an die Nahfeldspule (20) grenzt, umfasst.

## Revendications

1. Corps (12) d'un appareil électronique portable (10), le corps (12) comprenant :
une enveloppe conductrice (40) qui comprend une ou plusieurs ouvertures de perforation (22) définies dans cette dernière ;
un dispositif de remplissage remplissant au moins partiellement la ou les ouvertures de perforation (22) ; et
une bobine de champ proche (20) à proximité de l'enveloppe conductrice (40) et configurée pour le rayonnement à travers la ou les ouvertures de perforation (22),
la ou les ouvertures de perforation (22) ayant une forme générale de V tronqué avec des parois latérales effilées résultant en une ouverture à proximité d'une surface de l'enveloppe conductrice (40) qui est plus large que l'ouverture à proximité de l'autre surface de l'enveloppe conductrice (40),
la ou les ouvertures de perforation (22) étant au moins partiellement remplies d'une couche d'anodisation (42), et
au moins la partie de la ou des ouvertures de perforation (22) qui s'ouvre sur la surface extérieure de l'enveloppe conductrice (40) étant remplie de la couche d'anodisation (42), de telle sorte que la couche d'anodisation recouvre en continu le corps (12) du dispositif électronique portable (10).

2. Corps (12) d'un dispositif électronique portable (10) selon la revendication 1, la bobine de champ proche (20) étant intégrée avec l'enveloppe conductrice (40).

3. Corps (12) d'un dispositif électronique portable (10) selon la revendication 2, la bobine de champ proche (20) étant disposée dans un même plan qu'une partie de l'enveloppe conductrice (40) de manière adjacente à la bobine de champ proche (20).

4. Corps (12) d'un dispositif électronique portable (10) selon l'une quelconque des revendications 1 à 3, la ou les ouvertures de perforation (22) s'étendant radialement vers l'extérieur à partir de la bobine de champ proche (20).

5. Corps (12) d'un dispositif électronique portable (10) selon l'une quelconque des revendications 1 à 4, la charge comprenant au moins un matériau parmi un plastique, une encre, une céramique, un matériau ferreux ou un matériau adhésif.

6. Corps (12) d'un dispositif électronique portable (10) selon l'une quelconque des revendications 1 à 5, le corps (12) du dispositif électronique portable (10) comprenant en outre une couche conductrice plaquée ou enrobée (46), et la bobine de champ proche (20) étant également intégrée avec la couche conductrice plaquée ou enrobée (46).

7. Dispositif électronique portable (10) comprenant :
un corps (12) selon la revendication 1 ; et
des circuits électroniques (14) disposés à l'intérieur du corps (12) et en communication avec la bobine de champ proche (20).

8. Dispositif électronique portable (10) selon la revendication 7, la bobine de champ proche (20) étant intégrée avec l'enveloppe conductrice (40).

9. Dispositif électronique portable (10) selon la revendication 8, la bobine de champ proche (20) étant disposée dans un même plan qu'une partie de l'enveloppe conductrice (40) de manière adjacente à la bobine de champ proche (20).

10. Dispositif électronique portable (10) selon l'une quelconque des revendications 7 à 9, la ou les ouvertures de perforation (22) s'étendant radialement vers l'extérieur à partir de la bobine de champ proche (20).

11. Dispositif électronique portable (10) selon l'une quelconque des revendications 7 à 10, la bobine de champ proche (20) ayant des premier et second côtés faisant face respectivement à un extérieur et un intérieur du dispositif électronique portable (10), et le corps (12) du dispositif électronique portable (10) comprenant en outre une structure de support co-moulée en plastique (48) positionnée de telle sorte que le second côté de la bobine de champ proche (20) fait face à la structure de support co-moulée en plastique (48).

12. Dispositif électronique portable (10) selon l'une quelconque des revendications 7 à 11, comprenant en outre une feuille de ferrite (50) positionnée entre la bobine de champ proche (20) et un ou plusieurs autres composants conducteurs du dispositif électronique portable (10).

13. Procédé comprenant :
la définition d'une ou plusieurs ouvertures de perforation (22) dans une enveloppe conductrice (40) d'un dispositif électronique portable (10), la ou les ouvertures de perforation (22) ayant une forme générale de V tronqué avec des parois latérales effilées résultant en une ouverture à proximité d'une surface de l'enveloppe conductrice (40) qui est plus large que l'ouverture à proximité de l'autre surface de l'enveloppe conductrice (40) ;
le remplissage d'au moins partiellement la ou les ouvertures de perforation (22) ; et
la fourniture d'une bobine de champ proche (20) à proximité de l'enveloppe conductrice (40) de telle sorte que la bobine de champ proche (20) soit configurée pour le rayonnement à travers la ou les ouvertures de perforation (22),
la ou les ouvertures de perforation (22) étant au moins partiellement remplies d'une couche d'anodisation (42),
au moins la partie de la ou des ouvertures de perforation (22) qui s'ouvre sur la surface extérieure de l'enveloppe conductrice (40) étant remplie de la couche d'anodisation (42) de telle sorte que la couche d'anodisation recouvre en continu le corps (12) du dispositif électronique portable (10).

14. Procédé selon la revendication 13, la fourniture de la bobine de champ proche (20) à proximité de l'enveloppe conductrice (40) comprenant l'intégration de la bobine de champ proche (20) avec l'enveloppe conductrice (40).

15. Procédé selon la revendication 14, l'intégration de la bobine de champ proche (20) avec l'enveloppe conductrice (40) comprenant la formation de la bobine de champ proche (20) dans un même plan qu'une partie de l'enveloppe conductrice (40) de manière adjacente à la bobine de champ proche (20).
